# EUROPÄISCHE PATENTSCHRIFT

(11) **EP 2 054 131 B1**
(45) Veröffentlichungstag und Bekanntmachung des Hinweises auf die Patenterteilung: **02.01.2013**
(21) Anmeldenummer: 08760659.6
(22) Anmeldetag: 06.06.2008
(51) Int. Cl.: B01D 29/05, B01D 35/027, F02M 37/10

(54) **VORFILTER FÜR EINE KRAFTSTOFF-FÖRDEREINHEIT**
PRELIMINARY FILTER FOR A FUEL DELIVERY UNIT
PRÉFILTRE POUR UNE UNITÉ DE REFOULEMENT DE CARBURANT

(30) Priorität: 10.07.2007 DE 102007032057
(43) Veröffentlichungstag der Anmeldung: 06.05.2009
(73) Patentinhaber: Continental Automotive GmbH, 30165 Hannover (DE)
(72) Erfinder: WEHNER, Holger, 65812 Bad Soden-Altenhain (DE)
(86) Internationale Anmeldenummer: PCT/EP2008/057089
(87) Internationale Veröffentlichungsnummer: WO 2009/007184

(56) Entgegenhaltungen:
- DE-A1- 3 408 520
- FR-A- 2 775 735
- GB-A- 2 407 281
- US-A- 3 826 372
- US-A- 4 224 161
- US-A- 4 523 992
- US-A- 4 783 260
- US-A- 4 874 510

## Beschreibung

Die Erfindung betrifft einen Vorfilter für eine Kraftstoff-Fördereinheit eines Kraftfahrzeuges mit einem Filtergewebe, mit einem Anschlussstutzen zum Anschluss an die Kraftstoffpumpe und mit einem Stützelement zur Abstützung des Filtergewebes, wobei das Stützelement einstückig mit dem Anschlussstutzen gefertigt ist und einen als geschlossener Rahmen ausgebildeten Stützrand hat.

Solche Vorfilter werden in heutigen Kraftfahrzeugen häufig zur Filterung von verschiedenen Kraftstoffen wie Diesel oder Benzin eingesetzt und sind aus der Praxis bekannt. Zur Herstellung eines zur Filterung von Benzin bekannten Vorfilters wird aus einem Kunststoffgewebe ein der Abwicklung des fertigen Vorfilters entsprechender Gewebezuschnitt ausgestanzt. Dieser Gewebezuschnitt wird in eine Kunststoff - Spritzgussform eingelegt, In der Spritzgussform werden meist mehrere Stützelemente und der Anschlussstutzen an den Gewebezuschnitt angespritzt. Um den Gewebezuschnitt in der Spritzgussform fixieren zu können, sind zudem an dem Gewebezuschnitt Laschen und Überstande vorgesehen. Nach dem Spritzgussvorgang wird der Gewebezuschnitt zu dem Vorfilter gefaltet und die Ränder miteinander verschweißt und beschnitten (FR 2 775 735).

Bei für Diesel-Kraftstoff vorgesehenen Filtern wird meist aus einem Metallgewebe für ein Oberteil und ein Unterteil jeweils ein Gewebezuschnitt tiefgezogen. Diese Gewebezuschnitte werden anschließend einzeln in eine Spritzgussform eingelegt und Anschlussstutzen und Stützelemente angespritzt. Zum Abschluss werden die beiden Gewebezuschnitte mit ihren Rändern aufeinander gelegt und mittels eines Rahmens abgedichtet. Nachteilig bei dem bekannten Vorfilter ist, dass er sehr aufwändig zu fertigen ist und eine hohe Anzahl an Bearbeitungsschritten benötigt.

Der Erfindung liegt das Problem zugrunde, einen Vorfilter der eingangs genannten Art so zu gestalten, dass er besonders einfach zu fertigen ist und eine hohe Stabilität aufweist.

Dieses Problem wird erfindungsgemäß dadurch gelöst, dass auf beiden gegenüberliegenden Stirnseiten des Stützrandes jeweils ein Abschnitt des Filtergewebes dichtend befestigt ist und der Anschlussstutzen über Stege mit dem Stützrand verbunden ist.

Durch diese Gestaltung kann bei entsprechender Formgebung des Stützelementes das Filtergewebe nach der Fertigung von Stützelement und Anschlussstutzen befestigt werden. Hierdurch ist es nicht mehr erforderlich, das Filtergewebe in einer Spritzgussform mit dem Stützelement und dem Anschlussstutzen zu umspritzen. Das einstückige Bauteil aus Anschlussstutzen und Stützelement lasst sich wahlweise mit einem Kunststoffgewebe für Benzin- oder einem Metallgewebe für Diesel-Kraftstoffe verbinden. Damiz weist der erfindungsgemäße Vorfilter im einfachsten Fall zwei Bauteile auf und ist daher besonders einfach zu montieren. Die Anzahl der Bearbeitungsschritte wird zudem besonders gering gehalten. Der Vorfilter weist eine besonders große Oberfläche des Filtergewebes auf. Gleichzeitig wird die Stabilität des Vorfilters erhöht.

Eine Kammer zum Sammeln des Kraftstoffs lässt sich gemäß einer vorteilhaften Weiterbildung der Erfindung einfach erzeugen, wenn das Stützelement ein Stützrand hat und wenn zumindest eine der Stirnseiten des Stützrandes an dem Filtergewebe befestigt ist. Weiterhin weist der Stützrand eine einfache Form zur Befestigung des Filtergewebes auf. Ein Aneinanderliegen einander gedenüberstehender Filtergewebe lässt sich gemäß einer anderen vorteilhaften Weiterbildung der Erfindung einfach vermeiden, wenn das Filtergewebe von dem Stützrand gespannt ist. Weiterhin hat hierdurch der erfindungsgemäße Vorfilter eine besonders hohe Eigenstabilität.

Zur weiteren Erhöhung der Stabilität des erfindungsgemäßen Vorfilters trägt es gemäß einer anderen vorteilhaften Weiterbildung der Erfindung bei, wenn der Stützrand auf seiner dem Anschlussstutzen abgewandten Seite Querstege zur Abstützung des Filtergewebes hat.

Der Stützrand lässt sich mit dem Anschlussstutzen und den Querstegen in einer axial entformbaren Werkzeugform fertigen, wenn die Querstege gegenüber dem Anschlussstutzen versetzt angeordnet sind. Die axiale Entformbarkeit der Werkzeugform ermöglicht den Einsatz einer einzigen Werkzeugform für den gesamten Vorfilter. Diese Gestaltung trägt zu besonders geringen Fertigungskosten des erfindungsgemäßen Vorfilters bei.

Zur weiteren Erhöhung der Stabilität des erfindungsgemäßen Vorfilters trägt es gemäß einer anderen vorteilhaften Weiterbildung der Erfindung bei, wenn der Anschlussstutzen Szützrippen zur Abstützung des Filtergewebes hat und wenn die Stützrippen bis auf die Höhe der gegenüber liegenden Stirnseite des Stützrandes geführt sind.

Zur weiteren Vereinfachung des Aufbaus des erfindungsgemäßen Vorfilters trägt es bei, wenn der Anschlussstutzen einen Flansch zur dichtenden Verbindung mit dem Filtergewebe hat.

Zur weiteren Verringerung der Fertigungskosten des erfindungsgemäßen Vorfilters trägt es bei, wenn das Stützelement aus Kunststoff im Spritzgussverfahren gefertigt ist. Ein weiterer Vorteil dieser Gestaltung besteht darin, dass sich nach der Fertigung des Stützelementes das aus Kunststoff gefertigte Filtergewebe hierdurch besonders einfach im Schweißverfahren an dem Stützelement befestigen lässt. Bei der Verschwei-βung lässt sich das Filtergewebe zudem an dem Stützelement abdichten. Ein aus Metall gefertigtes Filtergewebe lässt sich nach dem Anschmelzen der Verbindungsstellen des Stützelementes ebenfalls einfach stoffschlüssig und dichtend befestigen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine an einem Boden eines Vorratsbehälters angeordnete Kraftstoff-Fördereinheit mit einem Vorfilter,
- Fig. 2: vergrößert den Vorfilter aus Figur 1 im Längsschnitt,
- Fig. 3: eine Schnittdarstellung durch den Vorfilter aus Figur 2 entlang der Linie III - III,
- Fig. 4: eine Schnittdarstellung durch den Vorfilter aus Figur 2 entlang der Linie IV - IV.

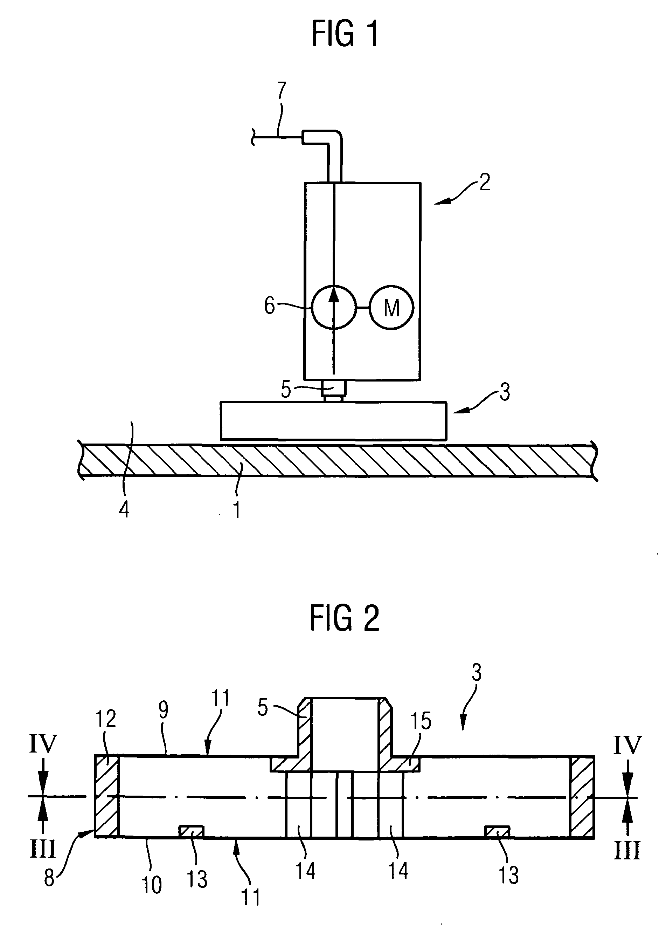

Figur 1 zeigt eine an einem Boden 1 eines Vorratsbehälters 4 eines Kraftfahrzeuges angeordnete Kraftstoff-Fördereinheit 2 mit einem Vorfilter 3. Der Vorfilter 3 ist nahe am Boden 1 des Vorratsbehälters 4 angeordnet und über einen Anschlussstutzen 5 mit der Kraftstoff-Fördereinheit 2 verbunden. Bei dem Vorratsbehälter 4 kann es sich um einen Kraftstoffbehälter eines Kraftfahrzeuges handeln. Die Kraftstoff-Fördereinheit 2 hat eine elektromotorisch angetriebene Kraftstoffpumpe 6, über die Kraftstoff vom Boden 1 des Vorratsbehälters 4 durch den Vorfilter 3 angesaugt und in eine zu einer nicht dargestellten Brennkraftmaschine führenden Vorlaufleitung 7 gefördert wird.

Der Vorfilter 3 ist in Figur 2 vergrößert dargestellt. Hierbei ist zu erkennen, dass der Vorfilter 3 zwei auf einem Stützelement 8 angeordnete ebene Abschnitte 9, 10 von Filtergewebe 11 hat. Das Stützelement 8 hat einen Stützrand 12, an dessen Stirnseiten die Abschnitte 9, 10 des Filtergewebes 11 befestigt sind. Der Stützrand 12 spannt zudem die Abschnitte 9, 10 des Filtergewebes 11. Zur weiteren Abstützung ist der Stützrand 12 einstückig mit Querstegen 13 gefertigt. Die Querstege 13 sind gegenüber dem Anschlussstutzen 5 versetzt angeordnet. Der Anschlussstutzen 5 ist zudem einstückig mit Stützrippen 14 gefertigt. Die Stützrippen 14 erstrecken sich zu dem von dem Anschlussstutzen 5 entfernt angeordneten Abschnitt 10 des Filtergewebes 11. Der Anschlussstutzen 5 hat einen Flansch 15, mit dem er mit einem der Abschnitte 9 des Filtergewebes 11 dichtend verbunden ist.

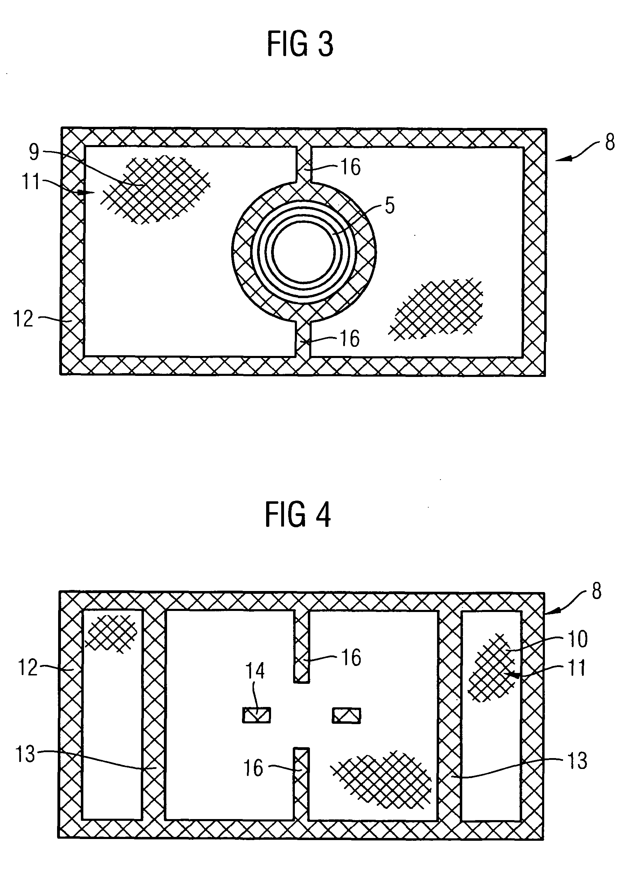

Figur 3 zeigt in einer Schnittdarstellung entlang der Linie III - III durch den Vorfilter 3 aus Figur 2, dass der Anschlussstutzen 5 über Stege 16 mit dem Stützrand 12 verbunden ist. Der Stützrand 12 ist als geschlossener Rahmen ausgebildet. Figur 4 zeigt zur Verdeutlichung den Vorfilter 3 in einer Schnittdarstellung entlang der Linie IV - IV aus Figur 2. Hier ist die versetzte Anordnung der Stege 16 mit dem Anschlussstutzen 5 und der Querstege 13 deutlich zu erkennen.

## Patentansprüche

1. Vorfilter für eine Kraftstoff-Fördereinheit eines Kraftfahrzeuges mit einem Filtergewebe (11), mit einem Anschlussstutzen (5) zum Anschluss an die Kraftstoffpumpe (6) und mit einem Stützelemente (8) zur Abstützung des Filtergewebes (11), wobei das Stützelement (8) einstückig mit dem Anschlussstutzen (5) gefertigt ist und einen als geschlossener Rahmen ausgebildeten Stützrand (12) hat, **dadurch gekennzeichnet, dass** auf beiden gegenüberliegenden Stirnseiten des Stützrandes (12) jeweils ein Abschnitt (9, 10) des Filtergewebes (11) dichtend befestigt ist und dass der Anschlussstutzen (5) über Stege (16) mit dem Stützrand (12) verbunden ist.

2. Vorfilter nach Anspruch 1, **dadurch gekennzeichnet, dass** das Filtergewebe (11) von dem Stützrand (12) gespannt ist.

3. Vorfilter nach einem der Ansprüche 1 oder 2, d a - **durch gekenntzeichnet** dass der Stützrand (12) auf seiner dem Anschlussstutzen (5) abgewandten Seite Querstege (13) zur Abstützung des Filtergewebes (11) hat.

4. Vorfilter nach Anspruch 3, **dadurch gekennzeichnet, dass** die Querstegen (13) gegenüber dem Anschlussstutzen (5) versetzt angeordnet sind,

5. Vorfilter nach einem der Ansprüche 1 bis 4, **da** - **durch gekennzeichnet**, dass der Anschlussstutzen (5) Stützrippen (14) zur Abstützung des Filtergewebes (11) hat und dass die Stützrippen (14) bis auf die Höhe der gegenüber liegenden Stirnseite des Stützrandes (12) geführt sind.

6. Vorfilter nach zumindest einem der vorhergehenden Ansprüche, **dadurch gekennzeichnet, dass** der Anschlussstutzen (5) einen Flansch (15) zur dichtenden Verbindung mit dem Filtergewebe (11) hat.

7. Vorfilter nach zumindest einem der vorhergehenden Ansprüche, **dadurch gekennzeichnet , dass** das Stützelement (8) aus Kunststoff im Spritzgussverfahren gefertigt ist.

## Claims

1. Prefilter for a fuel delivery unit of a motor vehicle, with a filter fabric (11), with a connection piece (5) for connecting to the fuel pump (6) and with a support element (8) for supporting the filter fabric (11), the support element (8) being manufactured in one piece with a connection piece (5) and has a support margin (12) designed as a closed frame, **characterized in that** a portion (9, 10) of the filter fabric (11) is fastened sealingly to each of the two opposite end faces of the support margin (12), and **in that** the connection piece (5) is connected to the support margin (12) via webs (16).

2. Prefilter according to Claim 1, **characterized in that** the filter fabric (11) is tensioned by the support margin (12).

3. Prefilter according to either one of Claims 1 or 2, **characterized in that** the support margin (12) has, on its side facing away from the connection piece (5), transverse webs (13) for supporting the filter fabric (11).

4. Prefilter according to Claim 3, **characterized in that** the transverse webs (13) are arranged so as to be offset with respect to the connection piece (5).

5. Prefilter according to one of Claims 1 to 4, **characterized in that** the connection piece (5) has support ribs (14) for supporting the filter fabric (11), and **in that** the support ribs (14) are led as far as level with the opposite end face of the support margin (12).

6. Prefilter according to at least one of the preceding claims, **characterized in that** the connection piece (5) has a flange (15) for sealing connection to the filter fabric (11).

7. Prefilter according to at least one of the preceding claims, **characterized in that** the support element (8) is manufactured from plastic by the injection molding method.

## Revendications

1. Préfiltre pour une unité véhiculant du carburant d'un véhicule automobile, ayant un tissu (11) filtrant, une tubulure (5) de raccordement pour le raccordement à la pompe (6) à carburant et un élément (8) d'appui pour l'appui du tissu (11) filtrant, l'élément (8) d'appui étant fabriqué d'une seule pièce avec la tubulure (5) de raccordement et ayant un bord (12) d'appui constitué sous la forme d'un cadre fermé, **caractérisé en ce que** respectivement une partie (9, 10) du tissu (11) filtrant est fixée de manière étanche sur deux côtés frontaux opposés du bord (12) d'appui et **en ce que** la tubulure (5) de raccordement est reliée au bord (12) d'appui par des nervures (16).

2. Préfiltre suivant la revendication 1, **caractérisé en ce que** le tissu (11) filtrant est tendu par le bord (12) d'appui.

3. Préfiltre suivant l'une des revendications 1 ou 2, **caractérisé en ce que** le bord (12) d'appui a, sur son côté éloigné de la tubulure (5) de raccordement, des traverses (13) d'appui du tissu (11) filtrant.

4. Préfiltre suivant la revendication 3, **caractérisé en ce que** les traverses (13) sont décalées par rapport à la tubulure (5) de raccordement.

5. Préfiltre suivant l'une des revendications 1 à 4, **caractérisé en ce que** la tubulure (5) de raccordement a des nervures (14) d'appui pour l'appui du tissu (11) filtrant et **en ce que** les nervures (14) d'appui sont guidées jusqu'au niveau du côté frontal opposé du bord (12) d'appui.

6. Préfiltre suivant au moins l'une des revendications précédentes, **caractérisé en ce que** la tubulure (5) de raccordement a une bride (15) pour la liaison étanche avec le tissu (11) filtrant.

7. Préfiltre suivant au moins l'une des revendications précédentes, **caractérisé en ce que** l'élément (8) d'appui est fabriqué en matière plastique dans le procédé de moulage par injection.
